# EUROPEAN PATENT APPLICATION

(11) **EP 0 540 988 A1**
(43) Date of publication of application: **12.05.1993**
(21) Application number: 92118357.0
(22) Date of filing: 28.10.1992
(51) Int. Cl.: G02B 6/44

(54) **Fiber obtic cable**

(30) Priority: 07.11.1991 NO 914353
(71) Applicant: ALCATEL STK A/S, N-0508 Oslo 5 (NO)
(72) Inventor: Berthelsen, Gunnar Claus, N-1300 Sandvika (NO)
(74) Representative: Pohl, Herbert, Dipl.-Ing

(57) **Abstract**

The present invention relates to a fiber optic cable comprising a tensile strength core (1) and at least one fiber ribbon element (3) containing a number of optical fibers (4) arranged side by side. The optical fiber ribbon element(s) (3) are stranded, in a helical or SZ fashion, directly on a circular tensile strength core (1,2). The optical fiber elements (3) do preferably, possibly together with dummy elements, constitute at least one complete layer around the core. The core (1) is an FRP (fiber reinforced plastic) element or steel rod with a sufficiently smooth surface to prevent microbending of the applied fibers, or it may be provided with an outer smooth sheath (2). The fibers may be arranged in groups separated by webs.

## Description

The present invention relates to fiber optic cables, and in particular to fiber optic cables comprising a tensile strength core and at least one fiber ribbon element containing a number of optical fibers arranged side by side.

Such cables are for example shown in EP Patent Application No. 0 394 618 (AEG). This patent describes a cable having a center rope to relieve tensile strains and a set of meander-like grooves which are provided in the outer surface of a cable carrier extruded onto the rope. A number of tapes each containing a number of optical fibers are arranged in the grooves, and there is arranged an elastic string in the bottom of each of the grooves to give the fiber tapes a certain overlength relative to the length of the groove.

Until now it has been considered necessary in all fiber optic cables with ribbons to ensure that the optical fiber tapes (ribbons) have a positive overlength in order to avoid tensile stresses in the optical fibers.

The object of the present invention is to provide an alternative optical cable. The features of the invention are defined in the claims. In a fiber optic cable made in accordance with this invention the fibers have no overlength except that they are stranded with a certain pitch relatively to the cable axis.

Above mentioned and other features and objects of the present invention will clearly appear from the following detailed description of embodiments of the invention taken in conjunction with the drawings, where
Figure 1 shows a crossection of a cable,
Figure 2 shows a perspective view of the cable, and
Figure 3 illustrates a fiber optic ribbon element.

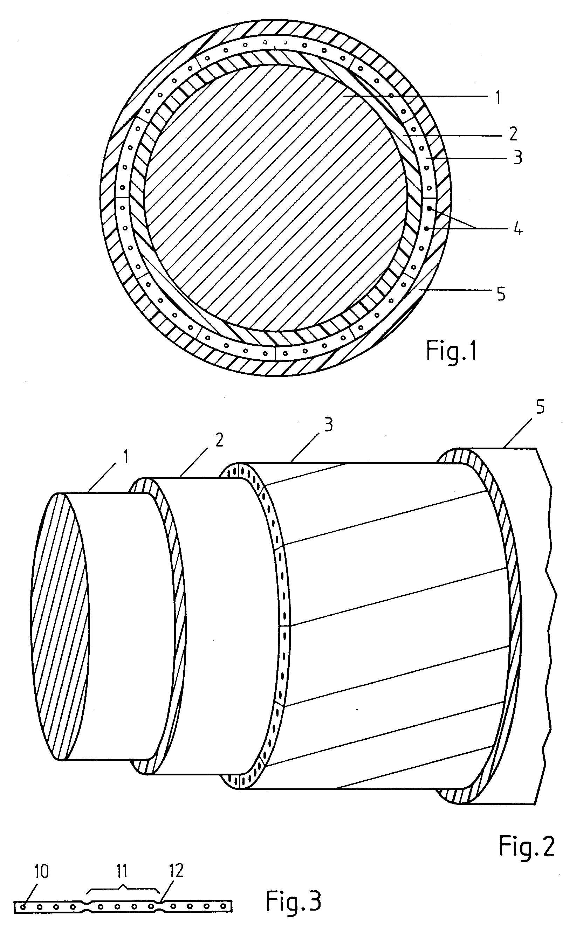

In Figure 1 a fiber optic cable including a central tensile strength element 1 which for instance can be an FRP (fiber reinforced plastic) element or a steel rod, having a circular smooth extruded sheath 2 having a sufficiently smooth surface to avoid microbending of the fibers. Alternatively the sheath can be omitted if the central element can be made with a sufficiently smooth surface to avoid microbending of the fibers. Over the smooth surface of the core there are stranded a number of fiber optic ribbon elements 3, each having a number of optical fibers 4. The ribbon elements 3 are stranded onto the core in a helical or SZ fashion with tension so as to eliminate or greatly reduce any space between the ribbon layer and the underlaying core 1,2. This is also illustrated in Figure 2.

The fiber ribbons 3 may contain any number (4, 6, 8, 10, or 12) of fibers 4. The ribbons may be designed as shown in Figure 3, where the fibers 10 are organized in groups 11 which are interconnected by webs 12.

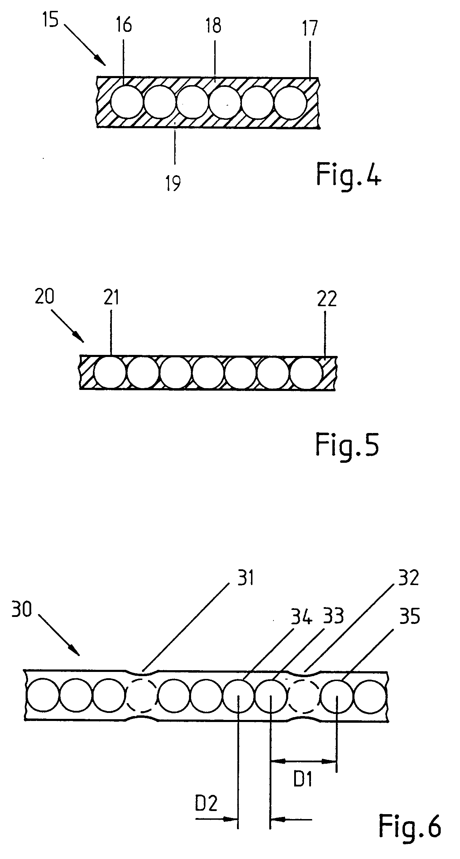

In preferred embodiments of fiber ribbons illustrated in Figures 4-6 the ribbons are characterized by the fact that adjacent fibers are in contact with each other and covered by a matrix material such as an acrylate. In Figure 4 a ribbon 15 includes groups of fibers 16 encapsuled within the ribbon matrix material 17 which fill all insterstices and provide additional mechanical cover 18 and 19. In Figure 5 a ribbon 20 includes groups of fibers 21 encapsuled within a matrix material 22 only filling the interstices between the fibers.

The fibers 16 may include a primary coating only, or they can be provided with additional coatings.

An additional feature of a fiber ribbon 30 is illustrated in Figure 6 where the width of the webs 31,32 is equal to the distance between the centers of adjacent fibers 33,34. In other words the distance D1 between the centers of fibers 33 and 35 is twice the distance D2 between the centers of the touching fibers 33,34. During installation of such a ribbon element, some or all of the webs 12 (31,32) can be cut, leaving approximately the same protection of the fibers nearest the broken web as over the other fibers in the ribbon.

The fiber optic ribbon elements 3 should preferably constitute at least one complete layer around the core. If the fiber ribbons do not fill a layer completely, there may be introduced dummy elements (not shown) to fill the layer, but a layer could also be 'incomplete'. The diameter of the core and the width of the fiber optic (and dummy) ribbon elements should be adjusted so as to provide a full layer or layers. If more than one layer is required, every second layer may or may not be stranded in opposite direction.

The optical fiber (and dummy) ribbon elements are stranded onto the core in a helical or SZ fashion. With a core diameter of 2-6 mm the lay length or pitch can be 50 to 400 mm or more. As an example, in Figures 1 and 2 there are arranged a number of 12 ribbons each containing 4 fibers to make a total of 48 fibers in the first layer.

As mentioned the fiber optic elements 3 are applied with tension on the core 1,2 so as to eliminate or minimize any space between the elements and the core. The tension of the elements against the core is maintained by a cover 5. The cover 5 may be a tape, yarns or a plastic sheath, or a combination of such covers. The optical fiber element layer(s) can be saturated with a water repellant compound.

## Claims

1. Fiber optic cable comprising a tensile strength core (1) and at least one fiber ribbon element (3) containing a number of optical fibers (4) arranged side by side, **characterized in that** the optical fiber ribbon element(s) (3) are stranded, in a helical or SZ fashion, directly on a circular tensile strength core (1,2).

2. Cable according to claim 1**, characterized in that** a number of optical fiber ribbon elements (3), possibly together with dummy elements, constitute at least one complete layer around the core.

3. Cable according to claim 1, **characterized in that** the core (1) is a fiber reinforced plastic element or a steel rod with a sufficiently smooth surface to avoid microbending in the applied fibers.

4. Cable according to claim 1, **characterized in that** the core (1) is a fiber reinforced plastic element or a steel rod with an outer sheath (2) having a sufficiently smooth surface to avoid microbending in the applied fibers.

5. Cable according to claim 1, **characterized in that** the optical fiber elements (3) are stranded onto the core (1,2) with a pitch of 50-400 mm or more.

6. Cable according to claim 1, **characterized in that** the fiber optic elements (3) are applied with tension on the core (1,2) so as to eliminate or minimize any space between the elements and the core.

7. Cable according to claim 7, **characterized in that** the tension of the elements (3) against the core (1,2) is maintained by a cover (5) which may be a tape, yarn or a sheath or a comnbination of such covers.

8. Cable according to claim 1, **characterized in that** optical fiber element layer(s) are saturated with a water repellant compound.

9. Cable according to claim 1, **characterized in that** the fibers (10; 16; 21; 33-36) of the optical fiber ribbon elements (3; 15; 20; 30) are organized in groups (11).

10. Cable according to claim 9, **characterized in that** the groups are interconnected by webs (12; 31,32).

11. Cable according to claim 10, **characterized in that** the webs (31,32) have a width substantially corresponding to the diameter of a fiber (33-36).
